# EUROPÄISCHE PATENTSCHRIFT

(11) **EP 2 868 976 B1**
(45) Veröffentlichungstag und Bekanntmachung des Hinweises auf die Patenterteilung: **19.06.2019**
(21) Anmeldenummer: 14182571.1
(22) Anmeldetag: 28.08.2014
(51) Int. Cl.: F24C 7/08, H02H 3/08, H02H 3/05, H05B 1/02

(54) **Haushaltsgerät mit Abschalteinrichtung**
Household device with shut-down device
Appareil ménager doté d'un dispositif de coupure

(30) Priorität: 25.09.2013 DE 102013219248
(43) Veröffentlichungstag der Anmeldung: 06.05.2015
(73) Patentinhaber: BSH Hausgeräte GmbH, 81739 München (DE)
(72) Erfinder: Harder, Stefan, 86415 Mering (DE); Schemmerer, Roman, 83349 Palling (DE); Schuhbäck, Peter, 83329 Holzhausen (DE); Zeraschi, Monika, 83301 Traunreut (DE)

(56) Entgegenhaltungen:
- EP-A1- 0 899 512
- DE-A1-102012 210 852
- US-A1- 2009 207 029
- US-A1- 2010 109 887
- US-B1- 7 964 989

## Beschreibung

Die Erfindung betrifft ein elektrisch betreibbares Haushaltsgerät, aufweisend eine elektrische Stromversorgungsleitung zu mindestens einem elektrischen Verbraucher und mindestens eine Abschalteinrichtung zum Unterbrechen der Stromversorgungsleitung nach Feststellung eines Ausnahmezustands des Haushaltsgeräts. Die Erfindung ist insbesondere anwendbar auf Gargeräte, die als Kombinationsgeräte mit einem Ofen und einem Kochfeld ausgebildet sind.

DE 35 35 743 A1 offenbart eine Abschaltsicherung zur Verhinderung einer Überhitzung, insbesondere bei einem Elektro-Kochherd mit einzelnen Kochplatten oder einer Glaskeramikkochfläche, wobei bei einer Überhitzung der komplette Elektro-Kochherd abgeschaltet wird. In dem Elektro-Kochherd können dazu unter den Kochplatten Überwachungsvorrichtungen in Form von Temperaturfühlern installiert werden. Diese Fühler schalten, wenn eine Platte außergewöhnlich heiß wird, ein als Abschalteinrichtung dienendes Relais. Gleichzeitig mit dem Relais wird ein Zeitrelais aktiviert. Das Zeitrelais schaltet nach einer bestimmten Zeitspanne (ca. 15 s) ein Schütz. Das Schütz unterbricht den Stromkreis und schaltet den E-Herd komplett ab. Das Schütz hält sich selbst und kann nur mittels eines Tasters reaktiviert werden.

DE 1 805 716 U offenbart eine Sicherheitsvorrichtung für elektrisch beheizte Geräte, insbesondere Elektroherde, wobei zumindest an einer gefährdeten Stelle, jedoch nicht an den der Beheizung dienenden Teilen des Gerätes ein bzw. je ein Temperaturfühler vorgesehen ist, der bei Auftreten einer gefährlich hohen Verlustwärme über eine Schaltvorrichtung zumindest einen Teil der Heizleistung abschaltet. Der Temperaturfühler mag über ein Relais und/oder ein Schaltschütz den oder die Stromkreise der Beheizungen unterbrechen. Ein Temperaturfühler mag unterhalb der Kochplatten und oberhalb der Oberkante der Backofenmuffel vorgesehen sein.

DE 39 18 239 A1 offenbart eine Sicherheitseinrichtung für elektrische Haushaltgeräte wie Wäschebehandlungs-, Geschirrspülmaschinen, Herde oder dergleichen mit Sensoren, die bei einem unzulässigen Betriebszustand des Gerätes dessen allpolige Abschaltung veranlassen, wobei innerhalb des Gerätegehäuses ein oder mehrere Sensoren angeordnet sind, die ohne direkten elektrischen bzw. mechanischen Kontakt zu den einzelnen elektrischen Bauteilen auf eine unzulässig hohe Temperatur der Umgebungsluft und/oder eine Rauch-, Gas- bzw. Feuerentwicklung im Inneren des Gerätes ansprechen und eine Sicherheitsschaltvorrichtung in der Zuleitung des Gerätes steuern.

US 2009/0207029 A1 offenbart einen Sicherheitssensor für ein Haushaltsgerät, der brennende Zustände erkennt und die Stromversorgung zum Gerät dann abschaltet. Die Vorrichtung umfasst eine Sensoreinheit, die in der Nähe eines Luftauslasses des Geräts positioniert ist, und eine Relaiseinheit, die entlang eines Stromversorgungspfads mit dem Gerät angeordnet ist. Die Relais- und Sensoreinheiten sind miteinander verbunden. Die Sensoreinheit umfasst einen Sensor zum Überwachen der Abluft von dem Gerät. Die Relaiseinheit umfasst eine Schaltung, die das Gerät im eingeschalteten Zustand elektrisch mit einer Stromquelle verbindet und im ausgeschalteten Zustand das Gerät elektrisch von der Stromquelle trennt, wobei die Schaltung von einem eingeschalteten Zustand in einen ausgeschalteten Zustand übergeht, wenn der Sensor brennende Zustände erkennt.

US 7,964,989 B1 offenbart ein System und ein Verfahren zum Fernsteuern von Energie zu einer elektrisch betriebenen Vorrichtung. Das System umfasst eine Vorrichtung, eine elektrisch betriebene Vorrichtung und eine Fernbedienung. Die Vorrichtung umfasst eine Schnur, eine Wechselstrom-Steckdose, einen Wechselstrom-Eingangsstecker, ein Verriegelungsrelais, einen Prozessor und einen Sende-Empfänger. Das System verwendet vorzugsweise ein WiFi-Kommunikationssignal, um Befehle von der Fernbedienung zum Gerät zu übertragen.

EP 0 899 512 A1 offenbart ein Gargerät mit einem beheizbaren Garraum zum Garen eines Garguts und mit einer Optikeinrichtung zur Erfassung des Garguts und dessen Abbildung auf einem Bildschirm. Der Bildschirm ist integraler Bestandteil des Gargeräts.

US 2010/0109887 A1 offenbart Systeme, Methoden und Geräte zum automatischen Deaktivieren eines Geräts. Wenn ein Rauchmelder / Alarm aktiviert ist, wird ein Signal oder eine Nachricht an mindestens eine Sicherheitsvorrichtung gesendet, die operativ mit mindestens einem Gerät verbunden ist. Das Gerät wird als Reaktion auf den Empfang des Signals oder der Nachricht deaktiviert.

Ferner sind Systeme zur Gefahrenerkennung auf Kochfeldern bekannt, bei denen eine Energiezufuhr für Kochfelder im Gefahrenfall durch eine mit der Netzanschlussleitung des Kochfeldes in Serie geschaltete, externe Abschalteinrichtung unterbrochen werden kann. Es ist die **Aufgabe** der vorliegenden Erfindung, die Nachteile des Standes der Technik zumindest teilweise zu überwinden und insbesondere eine vergleichsweise preisgünstige Möglichkeit zum effektiven Unterbrechen der Stromversorgungsleitung nach Feststellung eines Ausnahmezustands bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein elektrisch betreibbares Haushaltsgerät, das ein Kombinationsgerät mit einem Ofen und einem Kochfeld (z.B. ein Herd) ist, aufweisend eine elektrische Stromversorgungsleitung für das Kochfeld in Form eines Verbindungskabels, das von dem Ofen zu dem Kochfeld führt, und mindestens eine Abschalteinrichtung zum Unterbrechen der Stromversorgungsleitung nach Feststellung eines Ausnahmezustands des Haushaltsgeräts, wobei die Abschalteinrichtung eine Nachrüst-Abschalteinrichtung ist, wobei das Haushaltsgerät mit der Nachrüst-Abschalteinrichtung zum Unterbrechen der Stromversorgungsleitung nachgerüstet ist. Die Nachrüst-Abschalteinrichtung ist mit mindestens einer Überwachungsvorrichtung gekoppelt und die zum Unterbrechen der Stromversorgungsleitung nach Feststellung eines Gefahren- oder Ausnahmezustands des Haushaltsgeräts durch mindestens eine Überwachungsvorrichtung vorgesehen oder eingerichtet. Die Nachrüst-Abschalteinrichtung ist ferner zwischen den Ofen und das Verbindungskabel oder zwischen das Verbindungskabel und das Kochfeld geschaltet.

Dies ergibt den Vorteil, dass das Haushaltsgerät mit nur geringem Aufwand mit einer zusätzlichen Sicherheit nachrüstbar ist, insbesondere vor einem Ausbrechen eines Feuers. Dabei wird berücksichtigt, dass bei einem Gargerät mit Kochfeld eine besonders hohe Zahl möglicher Gefahrenquellen existiert, welche eine Gefahrenabschaltung des Haushaltsgeräts auslösen können. Die Nachrüst-Abschalteinrichtung kann besonders fehlerarm funktionieren, da das Haushaltsgerät auf sie vorabgestimmt ist. Beispielsweise kann eine korrekte elektrische Installation sichergestellt werden. Insbesondere lässt sich so die Nachrüst-Abschalteinrichtung einfach innerhalb des Haushaltsgeräts unterbringen. Ferner ist so eine feste Befestigung an das vorbereitete Haushaltsgerät einfach möglich.

Der Verbraucher mag z.B. ein Heizkörper, eine Induktionsspule, ein Lüfter, eine Pumpe, ein Motor usw. sein.

Das Haushaltsgerät mag durch konstruktive Anpassungen an die Nachrüst-Abschalteinrichtung zu deren Nachrüstung vorbereitet sein, z.B. durch Vorsehen passender Fassungen, Befestigungselemente, Datenleitungen usw. Das Haushaltsgerät mag bereits softwaremäßig an die Nachrüst-Abschalteinrichtung vorbereitet sein, z.B. durch deren automatische Erkennung, Überprüfung und/oder Einbindung in einen Betriebsablauf des Haushaltsgeräts.

Das Haushaltsgerät mag zur Vorbereitung der Nachrüstung eine Aufnahme für die Nachrüst-Abschalteinrichtung aufweisen. Dieser Aufnahme mag mindestens ein Befestigungselement zur Befestigung der Nachrüst-Abschalteinrichtung zugeordnet sein, z.B. mindestens ein Rastelement zur rastenden Befestigung der Nachrüst-Abschalteinrichtung in der Aufnahme.

Die elektrische Stromversorgungsleitung mag eine ein- oder mehrpolige, insbesondere dreipolige, vierpolige oder fünfpolige, Leitung sein. So mag eine dreipolige Versorgungsleitung z.B. drei voneinander isolierte Leiter aufweisen.

Die Abschalteinrichtung zum Unterbrechen der Stromversorgungsleitung mag ein oder mehrere Leiter der Stromversorgungsleitung unterbrechen. Insbesondere mögen alle Leiter der Stromversorgungsleitung unterbrochen werden ("allpolige Abschaltung").

Das Feststellen, dass ein Gefahren- oder Ausnahmezustand des Haushaltsgeräts bzw. an dem Haushaltsgerät vorliegt, kann in einer Weiterbildung durch die mindestens eine Überwachungsvorrichtung vorgenommen werden. Dies weist den Vorteil auf, dass die Überwachungsvorrichtung und die Nachrüst-Abschalteinrichtung auch direkt miteinander gekoppelt sein können. Auch mag so eine Programmierung oder Ausgestaltung des Haushaltsgeräts (z.B. einer Steuereinrichtung des Haushaltsgeräts) vereinfacht werden, da dort keine Auswertefunktion benötigt wird.

Es ist ferner eine Weiterbildung, dass das Feststellen des Gefahren- oder Ausnahmezustands an einer mit der Überwachungsvorrichtung gekoppelten Auswerteeinrichtung des Haushaltsgeräts vorgenommen wird. So kann die Überwachungsvorrichtung besonders einfach ausgestaltet werden. Die Auswerteeinrichtung mag insbesondere eine Steuereinrichtung des Haushaltsgeräts sein, insbesondere funktional darin integriert sein.

Es ist noch eine Ausgestaltung, dass mindestens eine Überwachungsvorrichtung eine geräteexterne Überwachungsvorrichtung ist. Dies ermöglicht eine zusätzliche und besonders vielgestaltige Überwachungsmöglichkeit. Auch können so Haushaltsgeräte eine zusätzliche Sicherheitsfunktion erlangen, welche diese bisher noch gar nicht aufweisen.

Die mindestens eine Überwachungsvorrichtung mag zusätzlich oder alternativ mindestens eine geräteinterne Überwachungsvorrichtung sein, also bereits werksseitig in das Haushaltsgerät integriert sein. So kann die Nachrüst-Abschalteinrichtung beispielweise mit bereits in dem Haushaltsgerät vorhandenen Überwachungsvorrichtungen zusammenarbeiten. Auch ist so eine besonders kompakte Möglichkeit der Geräteüberwachung möglich.

Es ist grundsätzlich möglich, dass die mindestens eine Überwachungsvorrichtung mindestens eine geräteinterne Überwachungsvorrichtung und/oder mindestens eine geräteexterne Überwachungsvorrichtung umfasst. Bei mehreren Überwachungsvorrichtungen mag die Nachrüst-Abschalteinrichtung insbesondere bei einer Gefahrenerkennung durch jede einzelne der Überwachungsvorrichtungen ausgelöst werden.

Es ist auch noch eine Ausgestaltung, dass die Nachrüst-Abschalteinrichtung direkt mit mindestens einer Überwachungsvorrichtung gekoppelt ist. So wird eine Nachrüstung erleichtert, insbesondere von Haushaltsgeräten ohne interne Elektronik oder mit einer nicht auf die Nachrüstung der Nachrüst-Abschalteinrichtung anpassbaren Elektronik.

Es ist eine alternative oder zusätzliche Weiterbildung, dass die Nachrüst-Abschalteinrichtung über eine Steuereinrichtung, insbesondere Steuerelektronik, des Haushaltsgeräts mit mindestens einer Überwachungsvorrichtung gekoppelt ist. Es mag also mindestens eine Überwachungsvorrichtung mit der Steuereinrichtung gekoppelt sein und diese z.B. über ein Vorliegen einer Gefahrensituation informieren. Die Steuereinrichtung mag dann die Nachrüst-Abschalteinrichtung entsprechend ansteuern oder auslösen. Die Steuereinrichtung mag die Nachrüst-Abschalteinrichtung selbsttätig erkennen. Die Steuereinrichtung mag aber auch zur Zusammenarbeit mit der Nachrüst-Abschalteinrichtung entsprechend programmiert und/oder technisch angepasst werden, z.B. durch Einstellen zugehöriger Jumper.

Es ist eine weitere Ausgestaltung, dass mindestens eine geräteexterne Überwachungsvorrichtung mit dem vorbereiteten Haushaltsgerät oder mit der mindestens einen Nachrüst-Abschalteinrichtung drahtlos koppelbar ist, was einen Verkabelungsaufwand beseitigt. Die drahtlose Kopplung mag beispielsweise mittels einer infrarotbasierten Datenverbindung oder mittels einer funkbasierten Datenverbindung realisiert sein.

Alternativ und/oder zusätzlich mag mindestens eine geräteexterne Überwachungsvorrichtung mit dem vorbereiteten Haushaltsgerät oder mit der mindestens einen Nachrüst-Abschalteinrichtung drahtgebunden koppelbar sein. Dies verbessert eine Übertragungssicherheit.

Es ist noch eine Ausgestaltung, dass die mindestens eine Nachrüst-Abschalteinrichtung oder, falls vorhanden, eine zugehörige Aufnahme von außen zugänglich ist bzw. sind. Dadurch ist die Nachrüstung besonders einfach bewerkstelligbar, insbesondere auch durch einen Endkunden.

Alternativ mag die mindestens eine Nachrüst-Abschalteinrichtung oder, falls vorhanden, eine zugehörige Aufnahme nicht von außen zugänglich sein. Dies ermöglicht beispielsweise eine vielgestaltigere Positionierung der Nachrüst-Abschalteinrichtung innerhalb des Haushaltsgeräts. Auch wird so eine äußerlich sichtbare Änderung des Haushaltsgeräts vermieden. In diesem Fall mag die Nachrüst-Abschalteinrichtung insbesondere nur durch einen Servicetechniker oder sonstiges Fachpersonal nachrüstbar sein.

Die mindestens eine Überwachungsvorrichtung mag insbesondere zur Überwachung eines Kochfelds einen Infrarotsensor, einen Rauchsensor und/oder einen Gassensor (z.B. zur Detektion von organischen und/oder anorganischen Verbrennungsprodukten und/oder Schwelprodukten) aufweisen. Jedoch mag auch eine Kamera mit einer Bilderkennungseinrichtung vorhanden sein, um beispielsweise eine Anwesenheit ungeeigneter Objekte an dem Haushaltsgerät feststellen zu können, z.B. von Besteck auf einem Induktionskochfeld oder einer Zeitung auf einem Kochfeld mit Widerstandsheizungen.

Es ist eine Ausgestaltung davon, dass die Nachrüst-Abschalteinrichtung in das Verbindungskabel integriert ist. Eine Nachrüstung ist so besonders einfach durch einen Austausch von Kabeln durchführbar.

Die Überwachungsvorrichtung ist insbesondere eine externe Überwachungsvorrichtung.

Die externe Überwachungsvorrichtung mag z.B. ein Feuermelder, ein Brandmelder usw. sein und beispielsweise einen Infrarotsensor, einen Rauchsensor und/oder einen Gassensor aufweisen. Die Überwachungsvorrichtung mag beispielsweise oberhalb des Kochfelds angeordnet sein, z.B. an einer Esse oder Dunstabzugshaube. Die Überwachungsvorrichtung mag insbesondere mit einer Steuereinrichtung in Form einer Steuerelektronik des Kochfelds gekoppelt, so dass die Überwachungsvorrichtung bei Erkennen eines Gefahren- oder Ausnahmezustands des Kochfelds (wenn also an dem Kochfeld eine Gefahrensituation oder eine mögliche Gefahrensituation wie eine Bildung von Schwelstoffen oder ein offenes Feuer erkannt worden ist), entsprechende Daten an die Steuerelektronik ausgeben kann. Die Steuerelektronik wiederum mag mindestens eine Aktion auslösen oder durchführen um einen Eintritt der Gefahr zu verhindern oder um die Gefahr zu beseitigen. Alternativ mag die Überwachungsvorrichtung Messdaten an die Steuerelektronik liefern, welche Steuerelektronik die Messdaten auswertet und einen Gefahrenzustand bestimmt.

Das Kochfeld weist insbesondere mehrere Kochstellen auf, welche jeweils durch einen Heizkörper heizbar sind, der einen Verbraucher oder elektrische Last darstellt. Die Kochstellen mögen beispielsweise als Massekochplatten, Induktionskochplatten oder Strahlungskochplatten ausgebildet sein.

Zum Betreiben der Kochstellen ist ein jeweiliges Taktrelais zur Taktung der Energiezufuhr (z.B. eines Betriebsstroms) vorhanden. Das Taktrelais wird von der Steuerelektronik angesteuert. Beispielsweise kann die Steuerelektronik einen Tastgrad zur Taktung der Energiezufuhr oder Bestromung einer bestimmten Kochstelle vorgeben, beispielsweise vorgegeben durch eine nutzerseitige Einstellung einer Kochstufe der zugehörigen Kochstelle. Im einfachsten Fall kann die Steuerelektronik bei Eintritt einer Gefahrensituation durch die Überwachungsvorrichtung ein oder mehrere Taktrelais so ansteuern, dass der Stromkreis einer Kochstelle oder die Stromkreise aller Kochstellen unterbrochen werden. Mit allen Heizkörpern gemeinsam elektrisch seriell verschaltet ist eine "gemeinsame" Abschalteinrichtung in Form mindestens eines Hauptschaltrelais.

Die Steuerelektronik kann bei Meldung einer Gefahrensituation durch die Überwachungsvorrichtung die Taktrelais so ansteuern, dass zumindest eines der Taktrelais dauerhaft (also nicht nur zur Umsetzung einer Taktung) unterbrochen wird und/oder das Hauptschaltrelais so ansteuern, dass es den gemeinsamen Stromkreis für alle Kochstellen öffnet. Insbesondere die dauerhafte Unterbrechung der Stromkreise durch Öffnen aller Taktrelais und des Hauptschaltrelais ermöglicht eine besonders sichere Unterbrechung. Die Zusammenarbeit mit der Überwachungsvorrichtung durch eine Aktivierung einer solchen Funktion mag insbesondere umfassen, dass eine zu diesem Zweck bereits in dem Kochfeld vorhandene Funktion aktiviert wird. Das Aktivieren mag automatisch von dem Kochfeld durchgeführt werden, nachdem ein Vorhandensein einer passenden und dazu vorgesehenen Überwachungsvorrichtung festgestellt worden ist. Das Aktivieren mag zusätzlich oder alternativ von einem Bediener durchgeführt werden, z.B. durch eine entsprechende Geräteeinstellung, z.B. mittels einer Auswahl in einem Benutzermenu.

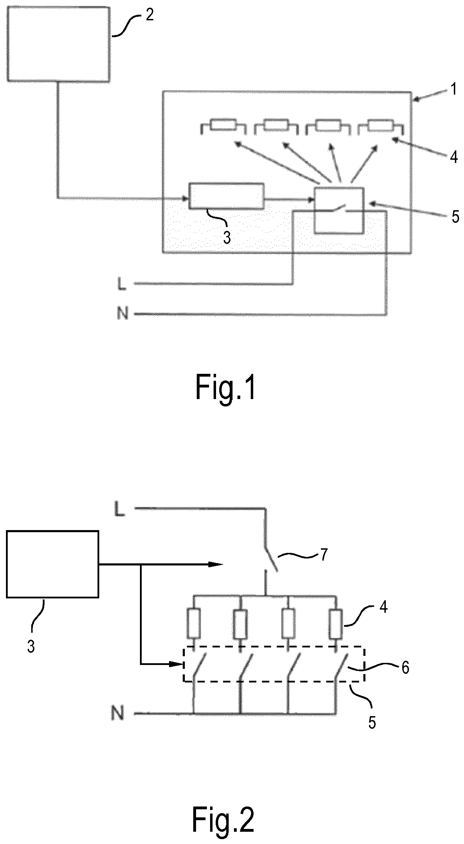

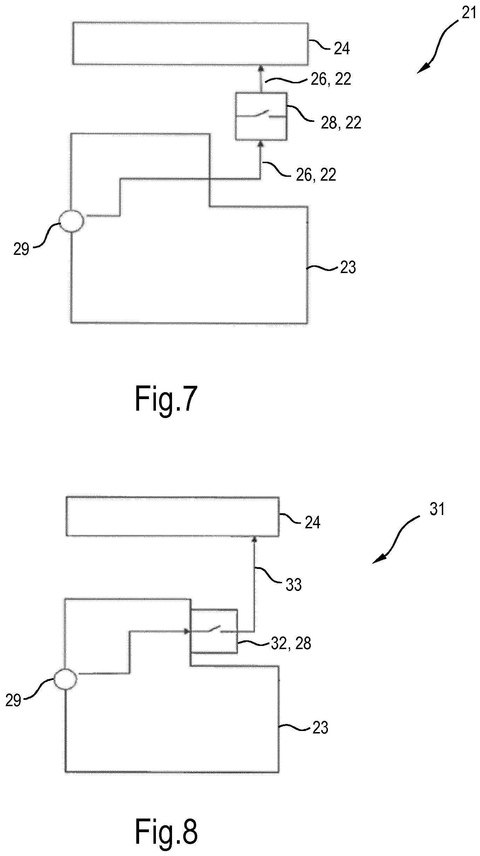

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein. Figur 8 zeigt eine erfindungsgemäße Ausführungsform. Bei den Figuren 1 bis 7 und der Figur 9 handelt es sich nicht um Ausführungsformen der Erfindung, sondern um Beispiele, die das Verständnis der Erfindung erleichtern.
- Fig.1: zeigt eine Skizze ausgewählter Funktionseinheiten eines Haushaltsgeräts in Form eines Kochfelds mit einer externen Überwachungsvorrichtung;
- Fig.2: zeigt eine genauere Skizze von Heizkörpern mit zugehörigen Abschalteinrichtungen des Kochfelds aus Fig.1;
- Fig.3: zeigt eine Skizze ausgewählter Funktionseinheiten eines weiteren Haushaltsgeräts in Form eines Kochfelds mit einer externen Überwachungsvorrichtung und einer Nachrüst-Abschalteinrichtung;
- Fig.4: zeigt eine erste Nachrüst-Abschalteinrichtung des Haushaltsgeräts aus Fig.3;
- Fig.5: zeigt eine zweite Nachrüst-Abschalteinrichtung des Haushaltsgeräts aus Fig.3;
- Fig.6: zeigt eine dritte Nachrüst-Abschalteinrichtung des Haushaltsgeräts aus Fig.3;
- Fig.7: zeigt eine Skizze ausgewählter Funktionseinheiten eines Haushaltsgeräts in Form eines Herds mit einer Nachrüst-Abschalteinrichtung;
- Fig.8: zeigt eine Skizze ausgewählter Funktionseinheiten eines erfindungsgemäßen Haushaltsgeräts in Form eines Herds mit einer Nachrüst-Abschalteinrichtung; und
- Fig.9: zeigt eine Skizze ausgewählter Funktionseinheiten noch eines weiteren Haus- haltsgeräts in Form eines Herds mit einer Nachrüst-Abschalteinrichtung.

**Fig.1** zeigt eine Skizze ausgewählter Funktionseinheiten eines Haushaltsgeräts in Form eines Kochfelds 1 mit einer externen Überwachungsvorrichtung 2. Die externe Überwachungsvorrichtung 2 mag z.B. ein Feuermelder, ein Brandmelder usw. sein und beispielsweise einen Infrarotsensor, einen Rauchsensor und/oder einen Gassensor aufweisen. Die Überwachungsvorrichtung 2 mag beispielsweise oberhalb des Kochfelds 1 angeordnet sein, z.B. an einer Esse oder Dunstabzugshaube (o. Abb.). Die Überwachungsvorrichtung 2 ist mit einer Steuereinrichtung in Form einer Steuerelektronik 3 des Kochfelds 1 gekoppelt, so dass die Überwachungsvorrichtung 2 bei Erkennen eines Gefahren- oder Ausnahmezustands des Kochfelds 1 (wenn also an dem Kochfeld 1 eine Gefahrensituation oder eine mögliche Gefahrensituation wie eine Bildung von Schwelstoffen oder ein offenes Feuer erkannt worden ist), entsprechende Daten an die Steuerelektronik 3 ausgeben kann. Die Steuerelektronik 3 wiederum mag mindestens eine Aktion auslösen oder durchführen um einen Eintritt der Gefahr zu verhindern oder um die Gefahr zu beseitigen. Alternativ mag die Überwachungsvorrichtung 2 Messdaten an die Steuerelektronik 3 liefern, welche Steuerelektronik 3 die Messdaten auswertet und einen Gefahrenzustand bestimmt.

Das Kochfeld 1 weist hier vier Kochstellen auf, welche jeweils durch einen Heizkörper 4 heizbar sind, der einen Verbraucher oder elektrische Last darstellt. Die Heizkörper 4 mögen beispielsweise eine Teil einer Massekochplatte, einer Induktionskochplatte oder eine Strahlungskochplatte sein. Die Heizkörper 4 mögen für die Massekochplatte und die Induktionskochplatte als Widerstandsheizung ausgebildet sein, für die Induktionskochplatte als Spule. Zum Betreiben der Heizkörper 4 ist eine Schaltvorrichtung 5 zur Taktung der Energiezufuhr (z.B. eines Betriebsstroms) der Heizkörper 4 vorhanden. In diesem Ausführungsbeispiel ist rein beispielhaft eine einpolige Stromversorgung (mit der Stromversorgungsleitung L bzw. N) der Heizkörper 4 eingezeichnet, während allgemein auch eine mehrpolige, z.B. dreipolige, Stromversorgung vorhanden sein kann.

Die Schaltvorrichtung 5 wird von der Steuerelektronik 3 angesteuert. So kann die Steuerelektronik 3 einen Tastgrad zur Taktung der Energiezufuhr oder Bestromung eines bestimmten Heizkörpers 4 vorgeben, beispielsweise vorgegeben durch eine nutzerseitige Einstellung einer Kochstufe der zugehörigen Kochstelle. Im einfachsten Fall kann die Steuerelektronik 3 bei Eintritt einer Gefahrensituation durch die Überwachungsvorrichtung 2 die Schaltvorrichtung 5 so ansteuern, dass eine Stromversorgungsleitung L, N bzw. der Stromkreis eines bestimmten Heizkörpers 4 oder die Stromkreise aller Heizkörper 4 unterbrochen werden.

**Fig.2** zeigt eine genauere Skizze der Heizkörper 4 mit zugehörigen Abschalteinrichtungen 6 und 7 des Kochfelds 1. Die Abschalteinrichtungen 6 sind als jeweilige Taktrelais zur Taktung der Energiezufuhr eines jeweiligen, damit elektrisch seriell verschalteten Heizkörpers 4 ausgebildet. Die Abschalteinrichtungen 6 stellen einen Teil der Schaltvorrichtung 5 dar. Mit allen Heizkörpern 4 gemeinsam elektrisch seriell verschaltet ist die "gemeinsame" Abschalteinrichtung 7, die insbesondere als ein "Hauptschaltrelais" dient.

Die Steuerelektronik 3 kann bei Meldung einer Gefahrensituation durch die Überwachungsvorrichtung 2 die Schaltvorrichtung 5 so ansteuern, dass zumindest eines der Taktrelais 6 dauerhaft (also nicht nur zur Umsetzung einer Taktung) unterbrochen wird und/oder das Hauptschaltrelais 7 so ansteuern, dass es den gemeinsamen Stromkreis für alle Heizkörper 4 öffnet. Die dauerhafte Unterbrechung der Stromkreise bzw. der Stromversorgungsleitung(en) L und/oder N durch Öffnen aller Taktrelais 6 und des Hauptschaltrelais 7 ermöglicht eine besonders sichere Unterbrechung. Insbesondere das Hauptschaltrelais 7 ist als Nachrüst-Abschalteinrichtung nachrüstbar.

Die Fähigkeit des Kochfelds 1, mit einer insbesondere externen Überwachungsvorrichtung 2 zusammenzuarbeiten, mag beispielsweise durch eine Aktivierung einer bereits im Gerät vorhandenen Funktion oder durch eine Nachrüstung einer solchen Funktion erreicht werden, z.B. durch eine Aktivierung bzw. eine Nachrüstung einer entsprechenden Software.

Das Kochfeld 1 mag ein eigenständiges Kochfeld sein oder einen Teil einer Ofen/Kochfeld-Kombination darstellen, z.B. eines Herds.

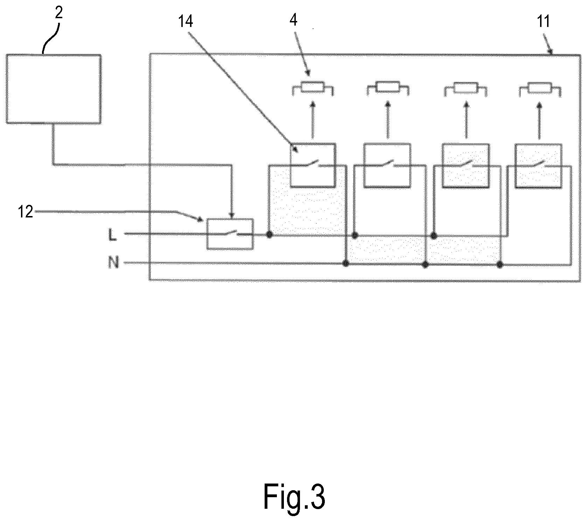

**Fig.3** zeigt eine Skizze ausgewählter Funktionseinheiten eines weiteren Kochfelds 11 mit einer externen Überwachungsvorrichtung 2 und einer Nachrüst-Abschalteinrichtung 12. Das Kochfeld 11 weist vier jeweiligen Kochstellen zugeordnete Heizkörper 4 auf. Diese werden durch Bimetallschalter 14 geschaltet, z.B. zum Betrieb entsprechend einer ausgewählten Kochstufe. Ein solches, vergleichsweise einfaches Kochfeld 11 mag insbesondere ein preiswertes eigenständiges Kochfeld sein.

Das Kochfeld 11 mag beispielsweise ohne eine darin integrierte Abschalteinrichtung verkauft werden, ist aber dazu eingerichtet, mit einer Nachrüst-Abschalteinrichtung 12 nachgerüstet zu werden. In Fig.3 ist die Nachrüst-Abschalteinrichtung 12 bereits nachgerüstet worden. Die Nachrüst-Abschalteinrichtung 12 ist hier als ein zusätzliches Schaltelement ausgebildet, das in eine allen Heizkörpern 4 gemeinsame Stromversorgungsleitung L eingebaut ist und somit den Stromkreis zu allen Heizkörper 4 gemeinsam abschalten kann. Die Nachrüst-Abschalteinrichtung 12 kann direkt von der Überwachungsvorrichtung 2 angesteuert werden, und zwar mit oder ohne Zwischenschaltung einer Steuerelektronik des Kochfelds 11, falls überhaupt vorhanden. Dadurch wird das Kochfeld 11 auf einfache Weise mit einer zusätzlichen Sicherheitsfunktion ausgerüstet. Die Überwachungsvorrichtung 12 mag mit dem Kochfeld 11 oder mit der Nachrüst-Abschalteinrichtung 12 drahtlos oder drahtgebunden gekoppelt sein. Dazu mag die Nachrüst-Abschalteinrichtung 12 beispielsweise einen Empfänger für von der Überwachungsvorrichtung 2 ausgesandte Daten aufweisen.

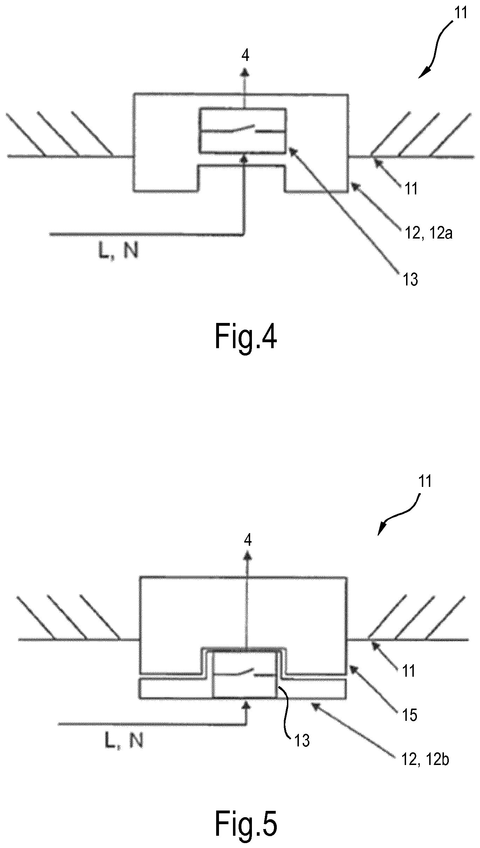

**Fig.4** zeigt eine mögliche erste Nachrüst-Abschalteinrichtung 12, 12a des Kochfelds 11. Die Nachrüst-Abschalteinrichtung 12a ist als ein Austauschteil oder Ersatzteil für eine Netzanschlussdose (15, siehe Fig.5) ausgebildet und umfasst somit sowohl die Funktion einer Netzanschlussdose 15 als auch die Abschaltfunktion. Dazu ist in der Nachrüst-Abschalteinrichtung 12a ein zusätzliches Schaltelement 13 vorhanden. Die Nachrüst-Abschalteinrichtung 12a kann auch als Netzanschlussdose 15 mit integriertem Schaltelement 13 angesehen werden. Das Schaltelement 13 mag in zumindest eine der in der Nachrüst-Abschalteinrichtung 12a verlaufenden Stromversorgungsleitungen L, N eingebaut sein.

Die Nachrüst-Abschalteinrichtung 12a ist von außen zugänglich und dadurch einfach nachrüstbar, z.B. durch einen Servicetechniker oder auch von einem Endkunden.

**Fig.5** zeigt eine zweite Nachrüst-Abschalteinrichtung 12, 12b des Kochfelds 11. Die Nachrüst-Abschalteinrichtung 12b ist als ein außenseitiger Aufsatz auf eine herkömmliche Netzanschlussdose 15 des Kochfelds 11 ausgebildet. Das Aufsetzen kann problemlos auch von einem Endkunden durchgeführt werden. Auch hier ist in der Nachrüst-Abschalteinrichtung 12b ein zusätzliches Schaltelement 13 vorhanden. Auch die Nachrüst-Abschalteinrichtung 12b ist von außen zugänglich. Sie ist besonders einfach auch von einem Endkunden installierbar bzw. nachrüstbar.

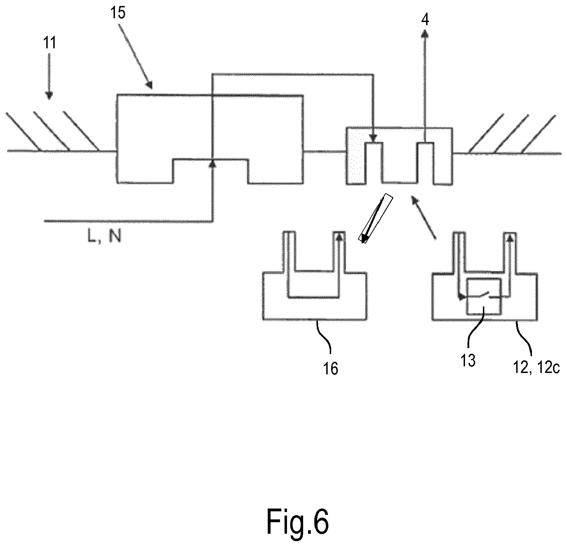

**Fig.6** zeigt eine dritte mögliche Nachrüst-Abschalteinrichtung 12, 12c des Kochfelds 11. Die Nachrüst-Abschalteinrichtung 12c ist als ein Austauschteil oder Ersatzteil für einen herkömmlichen Kurzschlussbügel 16 ausgebildet und umfasst insbesondere sowohl die Funktion des herkömmlichen Kurzschlussbügels 16 als auch die Abschaltfunktion.

Dazu ist auch in der Nachrüst-Abschalteinrichtung 12c ein zusätzliches Schaltelement 13 vorhanden. Die Nachrüst-Abschalteinrichtung 12c kann auch als ein Kurzschlussbügel 16 mit integriertem Schaltelement 13 angesehen werden. Das Schaltelement 13 mag in zumindest eine der in der Nachrüst-Abschalteinrichtung 12c verlaufenden Stromversorgungsleitungen L, N eingebaut sein. Die Nachrüst-Abschalteinrichtung 12c ist von außen zugänglich und besonders einfach nachrüstbar, z.B. durch einen Servicetechniker oder durch einen Endkunden.

**Fig.7** zeigt eine Skizze ausgewählter Funktionseinheiten eines Haushaltsgeräts in Form eines Herds 21 mit einer Nachrüst-Abschalteinrichtung 22. Die mindestens eine Überwachungsvorrichtung ist nicht dargestellt, mag jedoch eine externe Überwachungsvorrichtung 2 und/oder eine interne Überwachungsvorrichtung umfassen, welche direkt und/oder indirekt (z.B. über eine geräteinterne Steuereinrichtung 3) mit der Nachrüst-Abschalteinrichtung 22 gekoppelt sein können.

Der Herd 21 weist einen Ofen 23, z.B. einen Backofen, und ein Kochfeld 24 auf. Der Ofen 23 ist an eine Spannungsversorgung anschließbar. Das Kochfeld 24 ist herkömmlicherweise über eine aus dem Ofen 23 kommende elektrische Stromversorgungsleitung in Form eines Verbindungskabels mit Energie versorgbar.

Dabei mag der Ofen 23 mindestens einen nutzerseitig einstellbaren Energieregler 29, z.B. einen Kochstufen-Wählschalter, aufweisen, mittels dessen die in das Kochfeld 24 bzw. dessen Heizleiter eingespeiste Energie einstellbar oder regelbar ist. Das Kochfeld 24 weist dann keinen eigenen nutzerseitig einstellbaren Energieregler mehr auf.

Um eine zusätzliche Sicherheit für das Kochfeld 24 zu schaffen, ist das herkömmliche Verbindungskabel gegen die Nachrüst-Abschalteinrichtung 22 ausgetauscht worden, welche ein in ein Verbindungskabel 26 integriertes Schaltelement 28 aufweist. Die Nachrüst-Abschalteinrichtung 22 mag ferner z.B. einen drahtlosen und/oder drahtgebundenen Datenempfänger zum Empfangen mindestens eines Abschaltsignals aufweisen. Das herkömmliche Verbindungskabel kann also, z.B. durch einen Servicetechniker oder einen Endkunden, einfach gegen die Nachrüst-Abschalteinrichtung 25 ausgetauscht werden, und zwar durch einfaches Abheben des Kochfelds 24, ohne das Kochfeld 24 oder den Ofen 23 öffnen zu müssen. Zudem ist hierbei verhältnismäßig viel Platz für eine problemlose Unterbringung der Nachrüst-Abschalteinrichtung 25 vorhanden, so dass z.B. auf eine spezielle Aufnahme für das Schaltelement 28 verzichtet werden kann.

**Fig.8** zeigt ausgewählte Funktionseinheiten noch Herds 31 mit einer Nachrüst-Abschalteinrichtung 32. Die mindestens eine Überwachungsvorrichtung ist analog zu Fig.7 hier nicht dargestellt.

Der Herd 31 ist ähnlich zu dem Herd 21 aufgebaut, außer dass nun die Nachrüst-Abschalteinrichtung 32 zwischen dem herkömmlichen Verbindungskabel 33 und dem Ofen 23 (wie gezeigt an dem Ofen 23 befestigt) oder zwischen dem herkömmlichen Verbindungskabel 33 und dem Kochfeld 24 angeordnet ist. Die Nachrüst-Abschalteinrichtung 32 mag z.B. das zusätzliche Schaltelement 28 aufweisen.

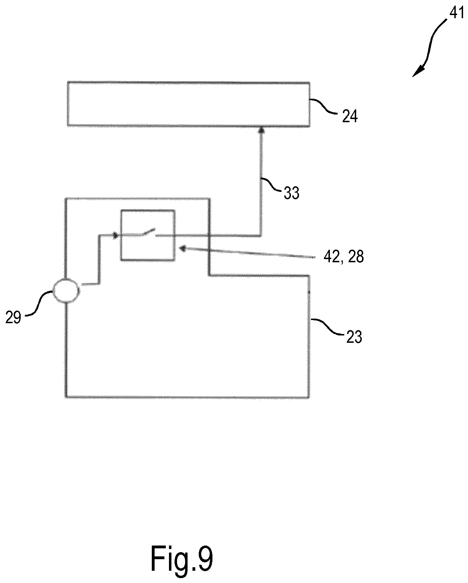

**Fig.9** zeigt ausgewählte Funktionseinheiten noch eines weiteren Herds 41 mit einer Nachrüst-Abschalteinrichtung 42. Die mindestens eine Überwachungsvorrichtung ist analog zu Fig.7 hier nicht dargestellt.

Der Herd 41 ist ähnlich zu dem Herd 31 aufgebaut, außer dass nun die Nachrüst-Abschalteinrichtung 42 in dem Ofen 23 eingebaut ist, und zwar zwischen dem Energieregler 29 und einem Anschluss für das herkömmliche Verbindungskabel 33 zu dem Kochfeld 24. Die Nachrüst-Abschalteinrichtung 42 mag z.B. das zusätzliche Schaltelement 28 aufweisen.

Selbstverständlich ist die vorliegende Erfindung nicht auf die gezeigten Ausführungsbeispiele beschränkt.

So kann anstelle einer einpoligen auch eine mehrpolige Stromversorgung des mindestens einen Verbrauchers vorgesehen sein.

Ferner mag eine Nachrüst-Abschalteinrichtung einen Empfänger zum Empfang von Daten, insbesondere Befehlen, aufweisen, so dass die Nachrüst-Abschalteinrichtung auf ein entsprechendes Signal hin den zugehörigen Stromkreis bzw. die zugehörige Stromversorgungsleitung unterbrechen kann.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezuaszeichenliste

- 1: Kochfeld
- 2: Überwachungsvorrichtung
- 3: Steuerelektronik
- 4: Heizkörper
- 5: Schaltvorrichtung
- 6: Abschalteinrichtung / Taktrelais
- 7: Hauptschaltrelais
- 11: Kochfeld
- 12: Nachrüst-Abschalteinrichtung
- 12a: erste Nachrüst-Abschalteinrichtung
- 12b: zweite Nachrüst-Abschalteinrichtung
- 12c: dritte Nachrüst-Abschalteinrichtung
- 13: Schaltelement
- 14: Bimetallschalter
- 15: Netzanschlussdose
- 16: herkömmlicher Kurzschlussbügel
- 21: Herd
- 22: Nachrüst-Abschalteinrichtung
- 23: Ofen
- 24: Kochfeld
- 25: Nachrüst-Abschalteinrichtung
- 26: Verbindungskabel
- 28: Schaltelement
- 29: Energieregler des Ofens
- 31: Herd
- 32: Nachrüst-Abschalteinrichtung
- 33: herkömmliches Verbindungskabel
- 41: Herd
- 42: Nachrüst-Abschalteinrichtung
- L: Stromversorgungsleitung
- N: Stromversorgungsleitung

## Patentansprüche

1. Elektrisch betreibbares Haushalts-Gargerät (31), das ein Kombinationsgerät mit einem Ofen (23) und einem Kochfeld (24) ist, aufweisend
- eine elektrische Stromversorgungsleitung (L, N) für das Kochfeld (24) in Form eines Verbindungskabels (33), das von dem Ofen (23) zu dem Kochfeld (24) führt und
- mindestens eine Abschalteinrichtung (32) zum Unterbrechen der Stromversorgungsleitung (L, N),
**dadurch gekennzeichnet, dass**
- die Abschalteinrichtung (32) eine Nachrüst-Abschalteinrichtung (32) ist,
- das Haushalts-Gargerät (31) mit der Nachrüst-Abschalteinrichtung (32) zum Unterbrechen der Stromversorgungsleitung (L, N) nachgerüstet ist,
- dass die Nachrüst-Abschalteinrichtung (32) mit mindestens einer Überwachungsvorrichtung (2) gekoppelt ist und die Nachrüst-Abschalteinrichtung (32) zum Unterbrechen der Stromversorgungsleitung (L, N) nach Feststellung eines Gefahren- oder Ausnahmezustands des Haushaltsgeräts (31) durch mindestens eine Überwachungsvorrichtung (2) eingerichtet ist und
- dass die Nachrüst-Abschalteinrichtung (32) zwischen den Ofen (23) und das Verbindungskabel (33) oder zwischen das Verbindungskabel (33) und das Kochfeld (24) geschaltet ist.

2. Haushalts-Gargerät (31) nach einem der vorhergehenden Ansprüche, **dadurch gekennzeichnet, dass** mindestens eine Überwachungsvorrichtung (2) eine geräteexterne Überwachungsvorrichtung ist.

3. Haushalts-Gargerät (31) nach Anspruch 2, **dadurch gekennzeichnet, dass** die mindestens eine geräteexterne Überwachungsvorrichtung (2) mit der mindestens einen nachgerüsteten Abschalteinrichtung (32) drahtlos koppelbar ist.

4. Haushalts-Gargerät (31) nach einem der vorhergehenden Ansprüche, **dadurch gekennzeichnet, dass** die Nachrüst-Abschalteinrichtung (32) direkt mit mindestens einer Überwachungsvorrichtung (2) gekoppelt ist.

5. Haushalts-Gargerät (11) nach einem der vorhergehenden Ansprüche, **dadurch gekennzeichnet, dass** die mindestens eine Nachrüst-Abschalteinrichtung von außen zugänglich ist.

## Claims

1. Electrically operable household cooking appliance (31), which is a combination appliance with an oven (23) and hob (24), having
- an electrical power supply line (L, N) for the hob (24) in the form of a connecting cable (33), which passes from the oven (23) to the hob (24), and
- at least one cut-out facility (32) for interrupting the power supply line (L, N) **characterised in that**
- the cut-out facility (32) is a retrofit cut-out facility (32),
- the household cooking appliance (31) is retrofitted with the retrofit cut-out facility (32) to interrupt the power supply line (L, N),
- the retrofit cut-out facility (32) is coupled to at least one monitoring device (2) and the retrofit cut-out facility (32) is set up to interrupt the power supply line (L, N) on detection of a hazard or exceptional state of the household appliance (31) by at least one monitoring device (2) and
- the retrofit cut-out facility (32) is connected between the oven (23) and the connecting cable (33) or between the connecting cable (33) and the hob (24).

2. Household cooking appliance (31) according to one of the preceding claims, **characterised in that** at least one monitoring device (2) is a monitoring device external to the appliance.

3. Household cooking appliance (31) according to claim 2, **characterised in that** the at least one monitoring device (2) external to the appliance can be coupled wirelessly to the at least one retrofitted cut-out facility (32).

4. Household cooking appliance (31) according to one of the preceding claims, **characterised in that** the retrofit cut-out facility (32) is coupled directly to at least one monitoring device (2).

5. Household cooking appliance (31) according to one of the preceding claims, **characterised in that** the at least one retrofit cut-out facility (32) is accessible from outside.

## Revendications

1. Appareil de cuisson (31) ménager électrique, qui est un appareil combiné comportant un four (23) et une plaque de cuisson (24), comprenant
- une ligne d'alimentation électrique (L, N) pour la plaque de cuisson (24) sous forme d'un câble de connexion (33) qui va du four (23) à la plaque de cuisson (24), et
- au moins un dispositif de coupure (32) destiné à interrompre la ligne d'alimentation électrique (L, N),
**caractérisé en ce que**
- le dispositif de coupure (32) est un dispositif de coupure (32) pour un rééquipement,
- l'appareil de cuisson (31) ménager est rééquipé avec le dispositif de coupure (32) de rééquipement destiné à interrompre la ligne d'alimentation électrique (L, N),
- le dispositif de coupure de rééquipement (32) est couplé à au moins un dispositif de surveillance (2) et le dispositif de coupure de rééquipement (32) est configuré pour interrompre la ligne d'alimentation électrique (L, N) après la détermination par au moins un dispositif de surveillance (2) d'une situation de danger ou d'un état d'urgence de l'appareil ménager (31), et
- le dispositif de coupure de rééquipement (32) est branché entre le four (23) et le câble de connexion (33) ou entre le câble de connexion (33) et la plaque de cuisson (24).

2. Appareil de cuisson ménager (31) selon l'une des revendications précédentes, **caractérisé en ce qu'**au moins un dispositif de surveillance (2) est un dispositif de surveillance externe à l'appareil.

3. Appareil de cuisson ménager (31) selon la revendication 2, **caractérisé en ce que** le au moins un dispositif de surveillance externe à l'appareil (2) peut être couplé sans fil à au moins un dispositif de coupure (32) rééquipé.

4. Appareil de cuisson ménager (31) selon l'une des revendications précédentes, **caractérisé en ce que** le dispositif de coupure (32) de rééquipement est couplé directement à au moins un dispositif de surveillance (2).

5. Appareil de cuisson ménager (11) selon l'une des revendications précédentes, **caractérisé en ce que** le au moins un dispositif de coupure de rééquipement est accessible de l'extérieur.
